# EUROPÄISCHE PATENTSCHRIFT

(11) **EP 3 213 829 B1**
(45) Veröffentlichungstag und Bekanntmachung des Hinweises auf die Patenterteilung: **09.10.2019**
(21) Anmeldenummer: 17159078.9
(22) Anmeldetag: 03.03.2017
(51) Int. Cl.: B08B 9/02, B08B 13/00, E03F 9/00, H02J 5/00, H02J 7/02, H04B 7/00, H04Q 9/00, B08B 9/027, B08B 9/04, E03F 7/12, G01N 21/954, G08C 17/02, H02J 50/00

(54) **ROHRINSPEKTIONS- UND/ODER WARTUNGSEINRICHTUNG**
PIPE INSPECTION AND/OR MAINTENANCE DEVICE
DISPOSITIF DE MAINTENANCE ET/OU D'INSPECTION DE TUBES

(30) Priorität: 04.03.2016 DE 202016101181 U
(43) Veröffentlichungstag der Anmeldung: 06.09.2017
(73) Patentinhaber: iPEK International GmbH, 87477 Sulzberg (DE)
(72) Erfinder: ZAHND, Fabian, 87437 Kempten (DE)
(74) Vertreter: 2s-ip Schramm Schneider Bertagnoll Patent- und Rechtsanwälte Part mbB

(56) Entgegenhaltungen:
- EP-A2- 2 091 129
- WO-A1-2014/029863
- WO-A2-2009/106266
- DE-A1- 10 216 206
- DE-A1-102010 040 865
- DE-A1-102014 106 251
- DE-U1-202013 100 435
- DE-U1-202014 105 998
- DE-U1-202015 102 328

## Beschreibung

### Gebiet der Erfindung

Die Erfindung betrifft eine Rohrinspektions- und/oder Wartungseinrichtung für ein Rohrinspektions- und/oder Wartungssystem, ein Rohrinspektions- und/oder Wartungssystem mit einer erfindungsgemäßen Rohrinspektions- und/oder Wartungseinrichtung, eine Ladeeinheit für eine Rohrinspektions- und/oder Wartungseinrichtung, sowie ein Energieversorgungsmodul für eine Rohrinspektions- und/oder Wartungseinrichtung.

### Hintergrund der Erfindung

Rohrinspektions- und/oder Wartungssysteme zur Inspektion und/oder Wartung von Rohren oder Kanälen sind aus dem Stand der Technik bekannt. Diese Systeme bestehen aus einer Vorschubeinrichtung und zumindest einer Rohrinspektions- und/oder Wartungseinrichtung, wobei die Rohrinspektions- und/oder Wartungseinrichtung lösbar oder unlösbar an der Vorschubeinrichtung angeordnet sein kann. Die Vorschubeinrichtung kann beispielsweise als Fahrwagen oder als Schiebemodul mit einem daran angeordneten Schiebeaal ausgestaltet sein. Mit der Vorschubeinrichtung wird die Rohrinspektions- und/oder Wartungseinrichtung in das zu inspizierende Rohr bzw. in das zu wartende Rohr vorgeschoben bzw. verfahren. Mit Hilfe von Sensoren und/oder Bildaufnahmeeinrichtungen der Rohrinspektions- und/oder Wartungseinrichtung kann das Innere des Rohres inspiziert werden. Mit Hilfe von Manipulatoren, beispielsweise Fräsen kann das Rohrinnere beispielsweise gesäubert werden.

Für die Übertragung von elektrischer Energie und Daten zwischen dem Rohrinspektions- und/oder Wartungssystem und einer außerhalb des Rohres angeordneten Kontrolleinrichtung ist es bekannt, das Rohrinspektions- und/oder Wartungssystem und die Kontrolleinrichtung mit Kabel zu verbinden, über die die Energie- und/oder Datenübertragung abgewickelt wird. Die am Rohrinspektions- und/oder Wartungssystem zur Verfügung stehende elektrische Leistung hängt hier unter anderem vom Querschnitt und der Länge des Kabels ab. Da der maximale Querschnitt und die Länge des Kabels für ein Rohrinspektions- und/oder Wartungssystem in der Regel fest vorgegeben sind, lasst sich die elektrische Leistung nicht ohne größere Änderungen bzw. Anpassungen des gesamten Systems erhöhen. Damit steht am Rohrinspektions- und/oder Wartungssystem systembedingt eine maximale elektrische Leistung zur Verfügung.

Um beispielsweise für Beleuchtungseinrichtungen oder Manipulatoren eine höhere Leistung zur Verfügung zu stellen, ist es bekannt, zusätzliche Akkumulatoren oder Batterien am Rohrinspektions- und/oder Wartungssystem vorzusehen.

Ferner ist es bekannt, beispielsweise Zusatzmodule, wie etwa Zusatzlichter, Greifer oder Messgeräte mit einem Akkumulator auszustatten, der die Energieversorgung dieser Zusatzmodule übernimmt. Zusätzlich oder alternativ kann dieser Akkumulator auch als Puffer dienen, der nur die benötigte fehlende Energie zur Verfügung stellt.

Der Akkumulator der Rohrinspektions- und/oder Wartungseinrichtung muss über ein Ladegerät geladen werden. Hierzu ist eine Kabelverbindung zwischen dem Ladegerät und der Rohrinspektions- und/oder Wartungseinrichtung notwendig, um das Ladegerät mit der Rohrinspektions- und/oder Wartungseinrichtung zu verbinden. Alternativ kann der Akkumulator auch über elektrische Kontaktstellen, die an der Gehäusewandung vorgesehen sind, und entsprechende Gegenkontaktstellen des Ladegeräts geladen werden. In beiden Fällen sind entsprechende Schnittstellen an der Rohrinspektions- und/oder Wartungseinrichtung notwendig, die genauso abgedichtet werden müssen, wie die Rohrinspektions- und/oder Wartungseinrichtung selbst. Zudem können diese Schnittstellen während eines Inspektions- bzw. Wartungsvorganges verschmutzen und im ungünstigsten Fall sogar beschädigt werden. Das Abdichten der Schnittstellen ist zudem aufwendig, da in jedem Fall gewährleistet werden muss, dass während eines Inspektions- bzw. Wartungsvorganges keinerlei Gase oder Flüssigkeiten in die Rohrinspektions- und/oder Wartungseinrichtung eindringen. Nachteilig ist ferner, dass die Kontaktstellen bzw. Steckerschnittstellen aufgrund der Umgebungsbedingungen in dem zu inspizierenden bzw. zu wartenden Rohr bzw. Kanal sehr schnell korrodieren können, was den Ladevorgang negativ beeinflussen kann. Im Stand der Technik ist es daher vorgesehen, die Kontaktstellen bzw. Steckerschnittstellen mit einer Abdeckung zu schützen, wobei die Abdeckung die Kontaktstellen bzw. Steckerschnittstellen fluid- und gasdicht abdecken müssen.

Alternativ kann der Akkumulator aus der Rohrinspektions- und/oder Wartungseinrichtung herausgenommen werden, um ihn durch einen anderen Akkumulator zu ersetzen. Nachteilig ist auch hierbei, dass das Aufnahmefach für den Akkumulator fluid- und gasdicht abgedeckt sein muss.

Aus der DE 20 2015 102 328 U1 ist ein Spülkopf mit einem in dem Spülkopf angeordneten Akkumulator und einer Sekundärspule eines induktiven Ladesystems bekannt.

Aus der DE 10 2010 040 865 A1 ist ein System mit einer Energie-Sendeantenne und einem Feldgerät mit einer Energie-Empfangsantenne bekannt. Mittels der WREL-Technik soll das Feldgerät über die Energie-Sendeantenne und die Energie-Empfangsantenne mit elektrischer Energie versorgt werden. Es ist ein Akkumulator vorgesehen, der nur als hilfsweise Energiequelle verwendet wird, wenn die Energieübertragung über die Energie-Sendeantenne und die Energie-Empfangsantenne gestört ist.

Aus der DE20 2014 105 998 U1 und aus der DE 20 2013 100 435 U1 sind jeweils eine Rohrinspektions- und/oder Wartungseinrichtung mit einem darin angeordneten Akkumulator bekannt. Dadurch soll auf das Mitführen von Kabeln zu verzichtet werden können.

Aus der EP 2 091 129 A2 ist ein Energieversorgungsmodul bekannt, um auf induktivem Wege elektrische Energie an ein elektrisches Gerät zu übertragen. Das elektrische Gerät selbst weist keinen eigenen Energiespeicher (z.B. Akkumulator) auf.

### Aufgabe der Erfindung

Aufgabe der vorliegenden Erfindung ist es daher, eine Akkumulator betriebene Rohrinspektions- und/oder Wartungseinrichtung für ein Rohrinspektions- und/oder Wartungssystem bereitzustellen, die ein einfacheres und verbessertes Laden des Akkumulators ermöglicht und die die aus dem Stand der Technik bekannten Nachteile zumindest teilweise vermeidet.

### Erfindungsgemäße Lösung

Erfindungsgemäß wird diese Aufgabe mit einer Rohrinspektions- und/oder Wartungseinrichtung und einem Rohrinspektions- und/oder Wartungssystem nach den unabhängigen Ansprüchen gelöst. Vorteilhafte Ausgestaltungen sind in den jeweiligen abhängigen Ansprüchen angegeben.

Bereitgestellt wird demnach eine Rohrinspektions- und/oder Wartungseinrichtung für ein Rohrinspektions- und/oder Wartungssystem, wobei die Rohrinspektions- und/oder Wartungseinrichtung aufweist
- ein Gehäuse,
- zumindest eine im Gehäuse angeordnete elektrische und/oder elektronische Komponente,
- zumindest einen im Gehäuse angeordneten und mit der elektrischen und/oder elektronischen Komponente gekoppelten Akkumulator,
   wobei
- die elektrische und/oder elektronische Komponente und der Akkumulator fluid- und gasdicht in dem Gehäuse angeordnet sind, und
- der Akkumulator mit einer Ladeeinrichtung gekoppelt ist, die ebenfalls fluid- und gasdicht in dem Gehäuse angeordnet ist, wobei die Ladeeinrichtung angepasst ist
   - mit einer außerhalb des Gehäuses anordenbaren Ladeeinheit zusammenzuwirken, um elektrische Energie drahtlos von der Ladeeinheit an die Ladeeinrichtung zu übertragen, und
   - mit der übertragenen elektrischen Energie zumindest teileweise den Akkumulator aufzuladen.

Die Rohrinspektions- und/oder Wartungseinrichtung zeichnet sich dadurch aus, dass
- das Gehäuse zumindest einen Abschnitt aufweist, in dem die Gehäusewandung ein nicht-metallisches Material aufweist, wobei die Ladeeinrichtung innerhalb des Gehäuses im Bereich des Abschnitts angeordnet ist, und
- die Ladeeinrichtung eine Sekundärspule aufweist, die mit einer Primärspule der Ladeeinheit zusammenwirkt, wobei die Sekundärspule im Bereich des Abschnitts angeordnet ist und dem Abschnitt zugewandt ist.

Vorteilhaft ist hierbei, dass Steckerschnittstellen und elektrische Kontakte nach außen entfallen, da zwischen der externen Ladeeinheit und der Ladeeinrichtung die Energieübertragung durch die Wandung des Gehäuses ermöglicht wird. Aufwendige Maßnahmen, um einen Verschleiß, eine Korrosion, eine Verschmutzung oder Beschädigungen der Steckerschnittstellen oder elektrischen Kontakte zu vermeiden sind damit nicht mehr notwendig. Zudem wird die Handhabung zum Aufladen des Akkumulators vereinfacht, da die jeweilige Rohrinspektions- und/oder Wartungseinrichtung lediglich an der externen Ladeeinheit angeordnet werden muss, ohne vorher elektrische Kontaktflächen oder Steckerschnittstellen freigeben zu müssen bzw. ohne vorher ein Ladekabel an der Einrichtung einstecken zu müssen.

Ein weiterer Vorteil liegt darin, dass durch den Verzicht von Steckerschnittstellen bzw. elektrischen Kontaktflächen die Rohrinspektions- und/oder Wartungseinrichtung einfacher bzw. besser abgedichtet, d.h. fluid- und gasdicht ausgestaltet werden kann.

Durch den nicht-metallischen Abschnitt der Gehäusewandung ist gewährleistet, dass die drahtlose Energieübertragung zwischen der externen Ladeeinheit und der Ladeeinrichtung durch die Gehäusewandung nicht negativ beeinflusst wird.

Die drahtlose Energieübertragung erfolgt hierbei auf induktiver Basis. Anstelle der beiden Spulen können in der Ladeeinheit und in der Ladeeinrichtung jeweils Metallplatten vorgesehen werden, die zusammen einen elektrischen Kondensator darstellen, mit dem Energie drahtlos auf kapazitiver Basis übertragen wird.

Vorteilhaft ist es, wenn an der dem Gehäuseabschnitt mit dem nicht-metallischen Material abgewandten Seite der Sekundärspule eine Abschirmung angeordnet ist. Damit können die elektromagnetischen Felder der Spulen gegen die hinter der Abschirmung angeordneten elektrischen Komponenten der Ladeeinrichtung abgeschirmt werden. Die Abschirmung kann beispielsweise als Aluminiumplatte ausgestaltet sein.

In einer vorteilhaften Ausgestaltung weist die Rohrinspektions- und/oder Wartungseinrichtung ein Modul zur drahtlosen Datenübertragung von und zu einer außerhalb des Gehäuses anordenbaren Sende-/Empfangseinrichtung auf. Vorteilhafterweise ist auch dieses Modul fluid- und gasdicht in dem Gehäuse angeordnet.

Damit kann in vorteilhafter Weise auch auf elektrische Kontaktierungen bzw. Anschlüsse für Kabel für die Datenübertragung verzichtet werden. Mit den vom Modul empfangenen Daten kann die Rohrinspektions- und/oder Wartungseinrichtung gesteuert werden und Daten der Rohrinspektions- und/oder Wartungseinrichtung, etwa Videodaten oder Sensordaten, können von dem Modul drahtlos an die externe Empfangseinrichtung übertragen werden.

Zusammen mit der Möglichkeit, die Rohrinspektions- und/oder Wartungseinrichtung drahtlos aufzuladen, kann so eine Rohrinspektions- und/oder Wartungseinrichtung bereitgestellt werden, dessen Gehäuse einfach und sicher fluid- und gasdicht ausgestaltet werden kann, ohne dass hierfür besondere Maßnahmen erforderlich sind, die vorgesehen werden müssten, um beispielsweise Steckverbindungen in dem Gehäuse abzudichten.

Das Modul zur drahtlosen Datenübertragung kann operativ mit der elektrischen und/oder elektronischen Komponente gekoppelt sein, um Daten zwischen der Sende-/Empfangseinrichtung und der elektrischen und/oder elektronischen Komponente vorzugsweise bidirektional zu übertragen.

In einer Ausgestaltung der Erfindung kann die Ladeeinrichtung weiter angepasst sein, mittels der Sekundärspule Daten drahtlos an die Ladeeinheit zu übertragen und/oder Daten von der Ladeeinheit zu empfangen. Damit kann ein Datenaustausch zwischen der Ladeeinheit und der Ladeeinrichtung bewerkstelligt werden. Beispielsweise kann die Ladeeinrichtung auf diese Weise der Ladeeinheit Ladeparameter mitteilen, die die Ladeeinheit verwenden kann, um Einstellungen für den Ladevorgang vorzunehmen. Dadurch ist es beispielsweise möglich, dass unterschiedliche Rohrinspektions- und/oder Wartungseinrichtungen, die unterschiedliche Ladeparameter voraussetzen, mit ein und derselben Ladeeinheit aufgeladen werden können, wobei die Ladeeinrichtung der Ladeeinheit mitteilt, um welche Ladeeinrichtung es sich aktuell handelt.

Die Ladeeinrichtung und die Ladeeinheit können beispielsweise über ein festgelegtes Protokoll Daten austauschen, mit denen der Ladevorgang initialisiert bzw. eingerichtet wird, bevor der Ladevorgang startet.

Bereitgestellt wird des Weiteren ein Rohrinspektions- und/oder Wartungssystem, welches zumindest eine erfindungsgemäße Rohrinspektions- und/oder Wartungseinrichtung aufweist.

In einer Ausgestaltung der Erfindung weist das Rohrinspektions- und/oder Wartungssystem eine Basiseinheit auf, wobei die Rohrinspektions- und/oder Wartungseinrichtung lösbar an der Basiseinheit angeordnet oder anordenbar ist.

Die Basiseinheit kann einen Fahrwagen oder ein Schiebesystem umfassen.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erfindungsgemäße Rohrinspektions- und/oder Wartungseinrichtung mit einer externen Ladeeinheit und einer externen Sende-/Empfangseinrichtung;
- Fig. 2: eine vorteilhafte Ausgestaltung eines Gehäuses einer Rohrinspektions- und/oder Wartungseinrichtung sowie zwei mögliche Ausgestaltungen einer Ladeeinrichtung einer erfindungsgemäßen Rohrinspektions- und/oder Wartungseinrichtung; und
- Fig. 3: eine alternative Ausgestaltung einer erfindungsgemäßen Rohrinspektions- und/oder Wartungseinrichtung mit einem Energieversorgungsmodul, welches an dem Gehäuse der Rohrinspektions- und/oder Wartungseinrichtung anordenbar ist.

### Detaillierte Beschreibung der Erfindung

Die vorliegende Erfindung ermöglicht es, eine Rohrinspektions- und/oder Wartungseinrichtung für ein Rohrinspektions- und/oder Wartungssystem drahtlos mit elektrischer Energie aufzuladen und gemäß einer vorteilhaften Ausgestaltung Daten drahtlos an die Rohrinspektions- und/oder Wartungseinrichtung zu übertragen, sodass auf einfache und sichere Weise eine fluid- und gasdichte Rohrinspektions- und/oder Wartungseinrichtung bereitgestellt werden kann. Das Rohrinspektions- und/oder Wartungssystem wird nachfolgend vereinfacht als Wartungssystem bezeichnet. Die Rohrinspektions- und/oder Wartungseinrichtung wird nachfolgend vereinfacht als Wartungseinrichtung bezeichnet.

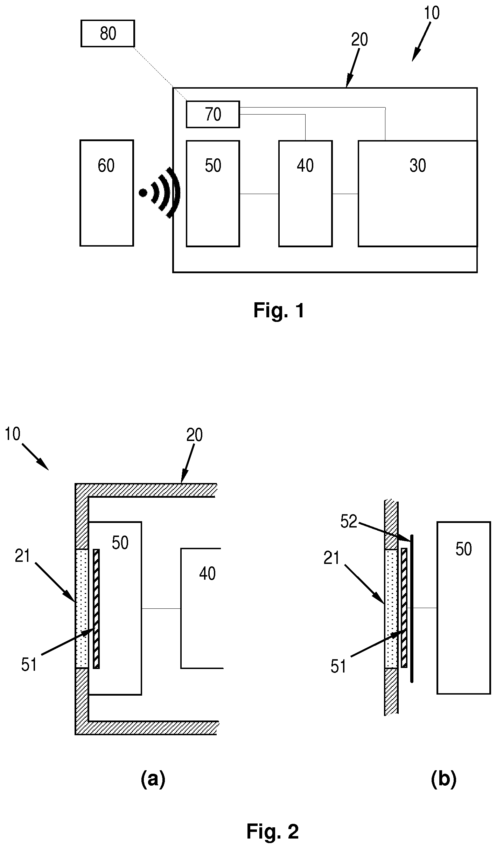

**Fig. 1** zeigt ein Blockschaltbild einer erfindungsgemäßen Wartungseinrichtung 10 mit einer externen Ladeeinheit 60 und einer externen Sende-/Empfangseinrichtung 80.

Die Wartungseinrichtung 10 weist ein Gehäuse 20 auf, in dem eine elektrische und/oder elektronische Komponente 30, ein Akkumulator 40, eine Ladeeinrichtung 50 und ein Modul 70 zur drahtlosen Datenübertragung angeordnet sind. Das Modul 70 zur drahtlosen Datenübertragung kann hier optional vorgesehen sein. Die elektronische Komponente 30 kann beispielsweise eine Kamera, Messeinrichtungen, Beleuchtungsmittel oder dergleichen umfassen. Die Wartungseinrichtung 10 kann aber auch mechanische Komponenten, beispielsweise Greifer oder Fräsen, aufweisen, die mit der elektrischen Komponente 30 gesteuert werden können.

Die Ladeeinrichtung 50 ist elektrisch mit dem Akkumulator 40 gekoppelt, um den Akkumulator 40 aufzuladen. Der Akkumulator 40 ist wiederum elektrisch mit der elektronischen Komponente 30 und gegebenenfalls mit dem Modul 70 zur drahtlosen Datenübertragung gekoppelt, um diese mit elektrischer Energie zu versorgen. Ferner ist das Modul 70 zur drahtlosen Datenübertragung mit der elektrischen Komponente 30 gekoppelt, um Daten zwischen dem Modul 70 und der elektrischen Komponente 30 auszutauschen. Damit können von dem Modul 70 von einer externen Sendeeinrichtung 80 empfangene Daten an die elektrische Komponente 30 weitergegeben werden, um beispielsweise die elektrische Komponente 30 zu steuern. Ferner kann das Modul 70 Daten von der elektrischen Komponente, etwa Videodaten oder Messdaten, entgegennehmen und drahtlos an die Empfangseinrichtung 80 übertragen.

Das Gehäuse 20 ist fluid- und gasdicht ausgestaltet. Insbesondere müssen für die Ladeeinrichtung 50 keinerlei Anschlüsse vorgesehen werden, die fluid- und gasdicht in die Gehäusewandung des Gehäuses 20 integriert werden müssten.

Erfindungsgemäß erfolgt das Aufladen des Akkumulators 40 der Wartungseinrichtung 10 drahtlos. Die Ladeeinrichtung 50 und die externe Ladeeinheit 60 sind so ausgestaltet, dass eine drahtlose Energieübertragung von der Ladeeinheit 60 zur Ladeeinrichtung 50 abgewickelt werden kann. Eine mögliche Ausgestaltung der Ladeeinrichtung ist mit Bezug auf Fig. 2 näher gezeigt.

Die Ladeeinrichtung 50 ist so angepasst, dass sie die von der externen Ladeeinheit 60 empfangene elektrische Energie zumindest teilweise in dem Akkumulator 40 speichern kann. Zum Aufladen des Akkumulators 40 der Wartungseinrichtung 10 muss die Wartungseinrichtung 10 lediglich an die externe Ladeeinheit 60 herangeführt werden, ohne dass Kabelverbindungen zwischen der externen Ladeeinheit 60 und der Wartungseinrichtung 10 benötigt werden. Die Ladeeinheit 60 kann so ausgestaltet sein, dass sie den Ladevorgang automatisch startet, wenn sie eine zu ladende Wartungseinrichtung 10 bzw. eine entsprechende Ladungseinrichtung 50 der Wartungseinrichtung 10 detektiert bzw. erkennt.

Weil sowohl der Ladevorgang als auch die Datenübertragung zwischen der externen Sende-/Empfangseinrichtung 80 und dem Modul 70 drahtlos abgewickelt werden, kann auf sämtliche Anschlüsse die hierfür bei aus dem Stand der Technik bekannten Wartungseinrichtungen notwendig sind, vollständig verzichtet werden. Einerseits kann dadurch besser gewährleistet werden, dass das Gehäuse 20 fluid- und gasdicht ist bzw. bleibt. Andererseits kann die Handhabung für das Aufladen der Wartungseinrichtung vereinfacht werden, weil die Wartungseinrichtung lediglich an die externe Ladeeinheit 60 herangeführt werden muss. Beispielsweise kann die Ladeeinheit 60 als Ladeschale ausgestaltet sein, die beispielsweise entsprechende Aufnahmemittel (z.B. eine Aussparung) zur Aufnahme der Wartungseinrichtung 10 aufweist.

Ein weiterer Vorteil der erfindungsgemäßen Wartungseinrichtung 10 liegt darin, dass die Anordnung der Wartungseinrichtung 10 zum Beispiel an einem Fahrwagen eines Wartungssystems erheblich vereinfacht wird, weil weder Kabel für die Energiezufuhr noch Kabel für die Datenübertragung vorgesehen werden müssen. Durch den Verzicht dieser Kabel stehen wesentlich mehr Freiheitsgrade hinsichtlich der Anordnung der Wartungseinrichtung 10 an dem Fahrwagen zur Verfügung. Ferner muss nicht darauf geachtet werden, dass die Kabel so verlegt werden, dass sie während eines Inspektions- und/oder Wartungsvorganges in einem Rohr bzw. Kanal nicht beschädigt werden.

**Fig. 2** zeigt in Abbildung (a) einen Ausschnitt einer erfindungsgemäßen Wartungseinrichtung 10, in dem die Ladeeinrichtung 50 angeordnet ist, wobei eine erste Ausgestaltung der erfindungsgemäßen Ladeeinrichtung 50 gezeigt ist. In Abbildung (b) ist eine Ladeeinrichtung 50 einer erfindungsgemäßen Wartungseinrichtung 10 in einer alternativen Ausgestaltung gezeigt.

Das Gehäuse 20 weist ein stabiles Material auf. Beispielsweise kann das Gehäuse als Edelstahlgehäuse ausgestaltet sein. Ein Abschnitt 21 des Gehäuses weist allerdings ein nicht-metallisches Material auf, um die Energieübertragung zwischen der externen Ladeeinheit 60 und der Ladeeinrichtung 50 nicht negativ zu beeinflussen. Vorteilhaft ist es also, wenn die Ladeeinrichtung 50 innerhalb des Gehäuses 20 dort angeordnet ist, wo sich der Abschnitt 21 mit dem nicht-metallischen Material befindet.

Die Energieübertragung zwischen der externen Ladeeinheit 60 und der Ladeeinrichtung 50 kann beispielsweise auf induktiver Basis abgewickelt werden, wobei die externe Ladeeinheit 60 eine Primärspule (Sendespule) und die Ladeeinrichtung 50 eine Sekundärspule 51 (Empfangsspule) aufweist. Vorteilhafterweise ist die Sekundärspule 51 der Ladeeinrichtung 50 so in der Ladeeinrichtung 50 angeordnet bzw. so relativ zum Gehäuse 20 angeordnet, dass sie sich unmittelbar am Abschnitt 21 des Gehäuses 20 befindet. Damit wird der Abstand zwischen der Sekundärspule 51 und der Primärspule der Ladeeinheit 60 minimiert und die Effizienz der elektrischen Energieübertragung maximiert.

Gemäß Abbildung (a) ist die Sekundärspule 21 in der Ladeeinrichtung 50 angeordnet. In einer alternativen Ausgestaltung gemäß Abbildung (b) kann sich die Sekundärspule 51 auch außerhalb der Ladeeinrichtung 50 befinden und elektrisch mit der Ladeeinrichtung 50 gekoppelt sein.

Vorteilhaft ist es, wenn zwischen der Ladeeinrichtung 50 und der Sekundärspule 51 eine Abschirmung 52 vorgesehen ist, um die Elektronik der Ladeeinrichtung 50 gegen das elektromagnetische Wechselfeld der Sekundärspule 51 abzuschirmen. Eine derartige Abschirmung 52 kann auch bei der in Abbildung (a) gezeigten Variante vorgesehen sein.

In einer alternativen Ausgestaltung kann das gesamte Gehäuse 20 aus einem stabilen Kunststoff gefertigt sein, sodass in der Gehäusewandung nicht eigens ein Abschnitt 21 vorgesehen werden muss, der ein nicht-metallisches Material aufweist.

Die Ladeeinrichtung 50 und die externe Ladeeinheit 60 können zudem so ausgestaltet sein, dass zwischen ihnen nicht nur elektrische Energie übertragen werden kann, sondern auch Daten zwischen ihnen ausgetauscht werden können. Mit den ausgetauschten Daten können sich die Ladeeinrichtung 50 und die externe Ladeeinheit 60 hinsichtlich bestimmter Ladeparameter für den Ladevorgang einigen (Handshake). Beispielsweise kann die Ladeeinrichtung 50 der externen Ladeeinheit 60 mitteilen, um welche Wartungseinrichtung 10 es sich handelt. Die externe Ladeeinheit 60 kann dann die Parameter für die Energieübertragung entsprechend einstellen.

Die Ladeeinrichtung 50 kann der externen Ladeeinheit 60 eine eindeutige Kennung der Wartungseinrichtung 10 mitteilen. Die Ladeeinheit 60 kann dann prüfen, ob es sich bei der eindeutigen Kennung um eine der Ladeeinheit 60 bekannte Kennung handelt. Zudem kann die Ladeeinheit 60 so ausgestaltet sein, dass sie den Ladevorgang nur dann durchführt, wenn es sich bei der eindeutigen Kennung um eine der Ladeeinheit 60 bekannte Kennung handelt. Die Kennung kann beispielsweise in verschlüsselter Form von der Ladeeinrichtung 50 an die Ladeeinheit 60 übertragen werden. Damit kann beispielsweise vermieden werden, dass eine Wartungseinrichtung 10 an einer externen Ladeeinheit aufgeladen wird, die nicht für das Aufladen dieser Wartungseinrichtung 10 vorgesehen oder geeignet ist. Die externe Ladeeinheit 60 kann eine Speichereinrichtung aufweisen, in der Kennungen von zugelassenen Wartungseinrichtungen gespeichert sind.

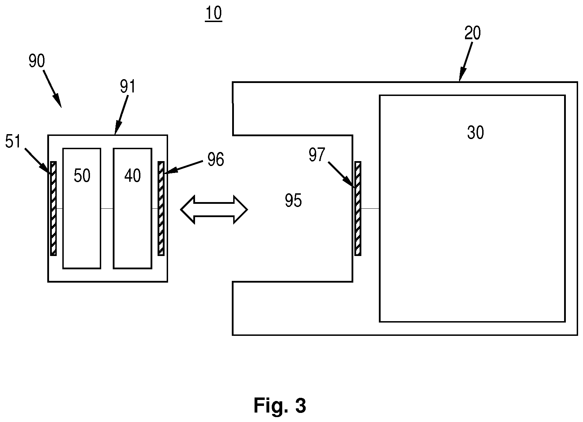

Fig. 3 zeigt eine alternative Ausgestaltung einer erfindungsgemäßen Wartungseinrichtung 10.

Im Unterschied zu der in Fig. 1 gezeigten Wartungseinrichtung 10 sind hier die Ladeeinrichtung 50 und der Akkumulator 40 als Energieversorgungsmodul 90 ausgestaltet, welches an dem Gehäuse 20 bzw. in einer Aussparung 95 des Gehäuses 20 anordenbar ist.

Das Energieversorgungsmodul 90 weist ein fluid- und gasdichtes Gehäuse 91 auf, in dem die Ladeeinrichtung 50 und der Akkumulator 40 angeordnet sind.

Ferner ist in dem Gehäuse 91 des Energieversorgungsmoduls 90 eine Sekundärspule 51 angeordnet, die zusammen mit der Primärspule der externen Ladeeinheit 60 zur drahtlosen Energieübertragung zwischen der Ladeeinheit 60 und dem Energieversorgungsmodul 90 vorgesehen ist.

Des Weiteren ist im Gehäuse 91 eine Primärspule 96 vorgesehen, die zusammen mit einer in dem Gehäuse 20 angeordneten Sekundärspule 97 für die drahtlose Energieübertragung zwischen dem Energieversorgungsmodul 90 und den in dem Gehäuse 20 angeordneten elektrischen Komponenten 30 vorgesehen ist.

Durch die modulare Bauweise der Wartungseinrichtung 10, bestehend aus dem Energieversorgungsmodul 90, und dem Gehäuse 20, in dem die elektrischen Komponenten 30 der Wartungseinrichtung 10 angeordnet sind, ist es möglich, das Energieversorgungsmodul 90 durch ein anderes Energieversorgungsmodul 90 auszutauschen. Damit kann die Wartungseinrichtung weiterverwendet werden, wenn der Akkumulator des einen Energieversorgungsmoduls 90 leer ist, indem lediglich das eine Energieversorgungsmodul durch ein anderes Energieversorgungsmodul 90 mit einem aufgeladenen Akkumulator 40 ausgetauscht wird. Dadurch können Totzeiten der Wartungseinrichtung 10 erheblich reduziert werden.

Vorteilhaft ist es, wenn das Energieversorgungsmodul 90 so ausgestaltet ist, dass es mit unterschiedlichen Wartungseinrichtungen 10 verwendet werden kann.

Weil das Gehäuse 20 und das Gehäuse 91 fluid- und gasdicht ausgebildet sind, kann das Energieversorgungsmodul 90 mittels einfacher Befestigungsmechanismen an dem Gehäuse 20 bzw. in der Aussparung 95 des Gehäuses 20 lösbar befestigt werden, ohne dass hierbei besondere Maßnahmen zur Abdichtung vorgesehen werden müssen.

Bei dem in Fig. 3 gezeigten Beispiel muss das Energieversorgungsmodul 90 lediglich in die Aussparung 95 eingebracht werden und dort arretiert werden. Das Arretieren kann beispielsweise mittel einer Klipsverbindung oder mittels eine Schraubverbindung bewerkstelligt werden. Die für den Betrieb der elektrischen Komponenten 30 notwendige elektrische Energie wird dann über die Primärspule 96 des Energieversorgungsmoduls 90 und der Sekundärspule 97, die in dem Gehäuse 20 angeordnet ist, von dem Energieversorgungsmodul 90 drahtlos an die elektrische Komponente 30 übertragen.

### Bezugszeichen

- 10: Rohrinspektions- und/oder Wartungseinrichtung (z.B. Kamera, Messeinrichtung, Beleuchtungsmittel)
- 20: Gehäuse (fluid- und gasdicht) der Rohrinspektions- und/oder Wartungseinrichtung 10
- 21: Abschnitt der Gehäusewandung aus einem nicht-metallischen Material
- 30: elektrische und/oder elektronische Komponente
- 40: Akkumulator der Rohrinspektions- und/oder Wartungseinrichtung 10 bzw. des Energieversorgungsmoduls 90
- 50: Ladeeinrichtung, die mit dem Akkumulator 40 gekoppelt ist, der Rohrinspektions- und/oder Wartungseinrichtung 10 bzw. des Energieversorgungsmoduls 90
- 51: Sekundärspule (Empfangsspule) der Ladeeinrichtung 51
- 52: Abschirmung, z.B. Aluminiumblech
- 60: Ladeeinheit, die außerhalb des Gehäuses 20 anordenbar ist
- 61: Primärspule (Sendespule) der Ladeeinheit (60)
- 70: Modul zur drahtlosen Datenübertragung
- 80: Sende-/Empfangseinrichtung
- 90: Energieversorgungsmodul
- 91: Gehäuse des Energieversorgungsmoduls 90
- 95: Aussparung in dem Energieversorgungsmodul 90
- 96: Primärspule des Energieversorgungsmodul 90
- 97: Sekundärspule

## Patentansprüche

1. Rohrinspektions- und/oder Wartungseinrichtung (10) für ein Rohrinspektions- und/oder Wartungssystem, aufweisend
- ein Gehäuse (20),
- zumindest eine im Gehäuse (20) angeordnete elektrische und/oder elektronische Komponente (30),
- zumindest einen im Gehäuse (20) angeordneten und mit der elektrischen und/oder elektronischen Komponente (30) gekoppelten Akkumulator (40),
wobei
- die elektrische und/oder elektronische Komponente (30) und der Akkumulator (40) fluid- und gasdicht in dem Gehäuse (20) angeordnet sind, und
- der Akkumulator (40) mit einer Ladeeinrichtung (50) gekoppelt ist, die ebenfalls fluid- und gasdicht in dem Gehäuse (20) angeordnet ist, wobei die Ladeeinrichtung (50) angepasst ist
- mit einer außerhalb des Gehäuses (20) anordenbaren Ladeeinheit (60) zusammenzuwirken, um elektrische Energie drahtlos von der Ladeeinheit (60) an die Ladeeinrichtung (50) zu übertragen, und
- mit der übertragenen elektrischen Energie zumindest teileweise den Akkumulator (40) aufzuladen,
**dadurch gekennzeichnet, dass**
- das Gehäuse (20) zumindest einen Abschnitt (21) aufweist, in dem die Gehäusewandung ein nicht-metallisches Material aufweist, wobei die Ladeeinrichtung (50) innerhalb des Gehäuses (20) im Bereich des Abschnitts (21) angeordnet ist, und
- die Ladeeinrichtung (50) eine Sekundärspule (51) aufweist, die mit einer Primärspule (61) der Ladeeinheit (60) zusammenwirkt, wobei die Sekundärspule (51) im Bereich des Abschnitts (21) angeordnet ist und dem Abschnitt (21) zugewandt ist.

2. Rohrinspektions- und/oder Wartungseinrichtung nach dem vorhergehenden Anspruch, wobei an der dem Abschnitt (21) abgewandten Seite der Sekundärspule (51) eine Abschirmung (52) angeordnet ist.

3. Rohrinspektions- und/oder Wartungseinrichtung nach einem der vorhergehenden Ansprüche, wobei diese ein Modul (70) zur drahtlosen Datenübertragung von und zu einer außerhalb des Gehäuses (20) anordenbaren Sende-/Empfangseinrichtung (80) aufweist, wobei das Modul (70) fluid- und gasdicht in dem Gehäuse (20) angeordnet ist, und wobei das Modul (70) operativ mit der elektrischen und/oder elektronischen Komponente (30) gekoppelt ist, um Daten zwischen der Sende-/Empfangseinrichtung (80) und der elektrischen und/oder elektronischen Komponente (30) zu übertragen, vorzugsweise bidirektional.

4. Rohrinspektions- und/oder Wartungseinrichtung nach einem der vorhergehenden Ansprüche, wobei die Ladeeinrichtung (50) weiter angepasst ist, mittels der Sekundärspule (51) Daten drahtlos an die Ladeeinheit (60) zu übertragen und/oder Daten von der Ladeeinheit (60) zu empfangen.

5. Rohrinspektions- und/oder Wartungssystem, aufweisend zumindest eine Rohrinspektions- und/oder Wartungseinrichtung (10) nach einem der vorhergehenden Ansprüche.

6. Rohrinspektions- und/oder Wartungssystem nach dem vorhergehenden Anspruch, wobei das Rohrinspektions- und/oder Wartungssystem eine Basiseinheit aufweist und wobei die Rohrinspektions- und/oder Wartungseinrichtung (10) lösbar an der Basiseinheit angeordnet oder anordenbar ist, wobei die Basiseinheit (2) einen Fahrwagen oder ein Schiebesystem umfasst.

## Claims

1. Pipe inspection and/or maintenance device (10) for a pipe inspection and/or maintenance system, comprising
- a housing (20),
- at least one electrical and/or electronic component (30) arranged in the housing (20),
- at least one accumulator (40) which is arranged in the housing (20) and is coupled to the electrical and/or electronic component (30),
- the electrical and/or electronic component (30) and the accumulator (40) being arranged in the housing (20) in a fluid-tight and gastight manner, and
- the accumulator (40) being coupled to a charging device (50) which is also arranged in the housing (20) in a fluid-tight and gastight manner, the charging device (50) being adapted
- to interact with a charging unit (60) that can be arranged outside the housing (20) in order to transmit electrical power wirelessly from the charging unit (60) to the charging device (50), and
- to charge the accumulator (40) with the transmitted electrical power at least in part,
**characterised in that**
- the housing (20) comprises at least one portion (21) in which the housing wall comprises a non-metal material, the charging device (50) being arranged inside the housing (20) in the region of the portion (21), and
- the charging device (50) comprises a secondary coil (51), which interacts with a primary coil (61) of the charging unit (60), the secondary coil (51) being arranged in the region of the portion (21) and facing the portion (21).

2. Pipe inspection and/or maintenance device according to the preceding claim, wherein a shield (52) is arranged on the side of the secondary coil (51) facing away from the portion (21).

3. Pipe inspection and/or maintenance device according to one of the preceding claims, wherein said device comprises a module (70) for wireless data transmission to and from a transceiver device (80) which can be arranged outside the housing (20), wherein the module (70) is arranged in the housing (20) in a fluid-tight and gastight manner, and wherein the module (70) is operatively coupled to the electrical and/or electronic component (30) in order to transmit data between the transceiver device (80) and the electrical and/or electronic component (30), preferably bidirectionally.

4. Pipe inspection and/or maintenance device according to any of the preceding claims, wherein the charging device (50) is also adapted to transmit data wirelessly to the charging unit (60) by means of the secondary coil (51) and/or to receive data from the charging unit (60).

5. Pipe inspection and/or maintenance system, comprising at least one pipe inspection and/or maintenance device (10) according to any of the preceding claims.

6. Pipe inspection and/or maintenance system according to the preceding claim, wherein the pipe inspection and/or maintenance system comprises a base unit and wherein the pipe inspection and/or maintenance device (10) is or can be detachably arranged on the base unit, wherein the base unit (2) has a carriage or sliding system.

## Revendications

1. Dispositif d'inspection et/ou de maintenance de conduites (10) pour un système d'inspection et/ou de maintenance de conduites, comprenant
- un boîtier (20),
- au moins un composant électrique et/ou électronique (30) disposé dans le boîtier (20),
- au moins un accumulateur (40) disposé dans le boîtier (20) et couplé au composant électrique et/ou électronique (30),
dans lequel
- le composant électrique et/ou électronique (30) et l'accumulateur (40) sont disposés dans le boîtier (20) de manière à être étanches aux fluides et aux gaz,
et
- l'accumulateur (40) est couplé à un dispositif de charge (50) qui est également disposé dans le boîtier (20) de manière étanche aux fluides et aux gaz, le dispositif de charge (50) étant adapté
- pour coopérer avec une unité de charge (60) qui peut être disposée à l'extérieur du boîtier (20) afin de transmettre de l'énergie électrique sans fil de l'unité de charge (60) au dispositif de charge (50)
et
- pour charger au moins partiellement l'accumulateur (40) avec l'énergie électrique transmise,
**caractérisé en ce que**
- le boîtier (20) comporte au moins une partie (21) dans laquelle la paroi du boîtier comprend un matériau non métallique, le dispositif de charge (50) étant disposé à l'intérieur du boîtier (20) dans la région de la partie (21), et
- le dispositif de charge (50) présente une bobine secondaire (51) qui interagit avec une bobine primaire (61) de l'unité de charge (60), la bobine secondaire (51) étant disposée dans la région de la partie (21) et orientée vers la partie (21).

2. Dispositif d'inspection et/ou de maintenance de conduites (10) selon la revendication précédente, dans lequel un blindage (52) est disposé sur le côté de la bobine secondaire (51) opposé à la partie (21).

3. Dispositif d'inspection et/ou de maintenance de conduites selon l'une quelconque des revendications précédentes, dans lequel le module (70) comporte un dispositif émetteur/récepteur disposé à l'extérieur du boitier (20) pour la transmission des données sans fil, dans lequel le module (70) est disposé de manière étanche aux fluides et aux gaz dans le boîtier (20), et dans lequel le module (70) est couplé fonctionnellement au composant électrique et/ou électronique (30) pour transmettre des données entre le dispositif émetteur/récepteur (80) et le composant électrique et/ou électronique (30), de préférence dans deux sens.

4. Dispositif d'inspection et/ou de maintenance de conduites selon l'une quelconque des revendications précédentes, dans lequel le dispositif de charge (50) est en outre adapté au moyen de la bobine secondaire (51) pour transmettre sans fil des données à l'unité de charge (60) et/ou pour recevoir des données de l'unité de charge (60).

5. Système d'inspection et/ou de maintenance de conduites comprenant au moins un dispositif d'inspection et/ou de maintenance de conduites (10) selon l'une quelconque des revendications précédentes.

6. Dispositif d'inspection et/ou de maintenance de conduites selon la revendication précédente, dans lequel le système d'inspection et/ou de maintenance de conduites comporte une unité de base, et dans lequel le dispositif d'inspection et/ou d'entretien de conduites (10) est disposé de manière amovible ou pouvant être disposé sur l'unité de base, dans lequel l'unité de base (2) compore un chariot ou un système coulissant.
